# EUROPEAN PATENT SPECIFICATION

(11) **EP 2 000 575 B1**
(45) Date of publication and mention of the grant of the patent: **22.09.2010**
(21) Application number: 08152137.9
(22) Date of filing: 29.02.2008
(51) Int. Cl.: D06F 37/10, D06F 39/14

(54) **Door of a drum type washer**
Tür einer Trommelwaschmaschine
Porte d'une machine à laver de type à tambour

(30) Priority: 05.06.2007 KR 20070054984
(43) Date of publication of application: 10.12.2008
(73) Proprietor: Samsung Electronics Co., Ltd., Suwon-si Gyeonggi-do (KR)
(72) Inventor: Chung, Young Suk, Bongdam-eup, Hwaseong-si Gyeonggi-do (KR)
(74) Representative: Grünecker, Kinkeldey, Stockmair & Schwanhäusser Anwaltssozietät

(56) References cited:
- EP-A- 0 293 984
- EP-A- 1 386 994
- EP-A- 1 884 585
- DE-A1-102005 023 445

## Description

### BACKGROUND

### 1. Field

The present invention relates to a door for a drum type washer. More particularly, to a drum type washer and its door capable of eliminating moisture inside a door glass.

### 2. Description of the Related Art

A washer mainly employs an electric motor as a main power source, and carries out washing and rinsing of dirty clothes to separate dirt from the dirty clothes using a detergent and water as well as dewatering of the rinsed clothes. The washer includes an electric motor as a power unit, a mechanical drive that transmits energy to wash, a controller that controls a washing process, and feed and drain units that feed and drain water. This washer is generally classified into a cylinder type, an agitator type, and a pulsator type.

In the cylinder type, water, detergent and wash are put into a drum having several lifters, and then the drum is rotated about a horizontal axis at a low speed. Thereby, the wash is done by impact applied when the wash is raised and falls by the lifters. This cylinder type does little damage to the wash, and can use a small quantity of water. However, the cylinder type must heat the water using, for instance, an electric heater due to the weak washing force, thereby leading to the high consumption of electricity, a long washing time, and a high level of noise.

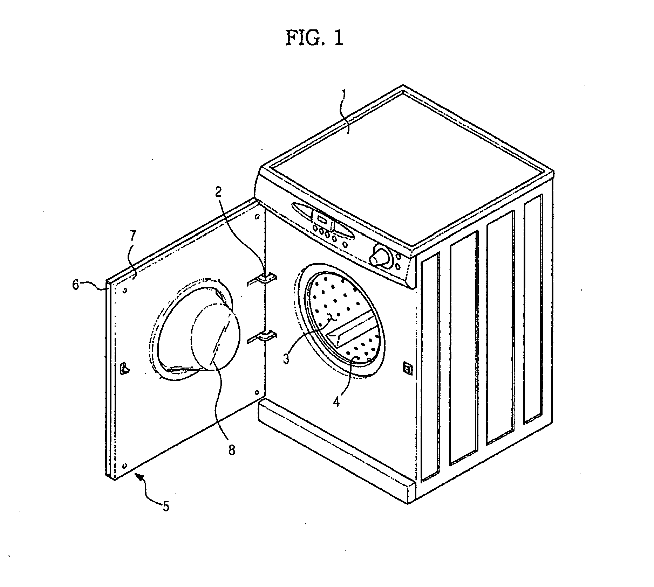

FIG. 1 is a perspective view illustrating an existing drum type washer.

The drum type washer includes a housing 1 representing an external appearance, an opening 3 through which wash is put or withdrawn at a front of the housing 1, and a door 5 that can open and close the opening 3. The door 5 is pivotably coupled to one side of the housing 1 through a hinge unit 2.

As illustrated in FIG. 1, the door 5 has an outer door 6 on an outer side thereof, an inner door 7 on an inner side thereof, and a door glass 8 coupled between the outer door 6 and the inner door 7. In this case, the inner door 7 is adapted to insert the door glass 8. Thus, after the door glass 8 is inserted into the inner door 7, the outer door 6 is coupled with the inner door 7. Thereby, the door glass 8 can be fixed to the door 5.

When the door 5 is closed, the outer door 6 represents the external appearance of the drum type washer. Hence, the outer door 6 is formed of a transparent material to show off a design of the drum type washer and simultaneously enable a user to observe an interior of a drum. Like the outer door 6, the door glass 8 is formed of a transparent material, for example, so that the user can look at the interior of the drum in the state where the door 5 is closed.

However, in the state where a part of the door glass 8 is inserted into the drum 4, the interior of the drum 4 frequently changes temperature and humidity, due to a supply of warm water or cold water, and an operation of a steam generator, a hot air blower, etc., and simultaneously the door glass 8 is influenced. In this manner, the change of the temperature and humidity in the drum 4 causes moisture to be generated inside the door glass 8, so that the external appearance of the drum type washer is damaged, and simultaneously the user cannot look at the interior of the drum 4.

DE 10 2005 023 445 A1 discloses a dryer with a door. The door comprise a door frame with an inner frame part and an outer frame part. A corresponding door glass of the door is supported between the two frame parts and an additional sealing element. It is also possible to further protect the door glass to the outside by arranging an additional protection window which is supported by an outer frame part.

EP 0 293 984 A1 discloses a door for washing machines. In the door there is a window which is held between an annular frame and a bezel as parts of a door.

### Summary of the invention

It is an object of the present invention to provide a door and a drum type washer with such a door, wherein the door is capable of eliminating moisture inside a door glass using natural convections such that the user can clearly look at the interior of the drum.

This object is solved by the features of the independent claim.

Advantages embodiments are disclosed by the sub-claims.

According to an aspect of the present embodiment, the holder includes an opening into which the door glass is inserted.

According to an aspect of the present embodiment, the door glass has a body inserted into the opening of the holder, and a wing integrally formed with the body supported on the holder.

According to an aspect of the present embodiment, the holder has a first curvature facing the wing, the wing has a second curvature facing the holder, the first curvature being engaged with the second curvature.

According to an aspect of the present embodiment, the support rib has an annular shape to support an inner surface of the wing.

According to an aspect of the present embodiment, the hole set is formed at an end of the support rib that faces the door glass.

According to an aspect of the present embodiment, the support rib includes a plurality of hole sets.

According to an aspect of the present embodiment, the hole set has a slot shape.

According to an aspect of the present embodiment, the hole set includes a first hole located above a central line of the support rib, and a second hole located below the central line of the support rib.

According to an aspect of the present embodiment, the first and second holes are spaced at a distance farthest apart from one another with respect to the central line of the support rib.

According to an aspect of the present embodiment, the hole set includes a first hole and a second hole, and perpendicular distances of the first hole and the second hole to the central line of the support rib are different from each other.

According to an aspect of the present embodiment, the first hole is located at a position corresponding to substantially 3 o'clock along the support rib, and the second hole is located at a position corresponding to approximately 11 o'clock along the support rib.

According to an aspect of the present embodiment, the inner door includes at least one vent such that the second space communicates with external air.

According to an aspect of the present embodiment, the hole set includes a first hole located above a central line of the support rib, and a second hole located below the central line of the support rib.

According to an aspect of the present embodiment, the first and second holes are spaced at a distance farthest apart from one another with respect to the central line of the support rib.

According to an aspect of the present embodiment, the hole set includes a first hole and a second hole, and perpendicular distances of the first hole and the second hole to the central line of the support rib are different from each other.

At least one hole may be defined in a portion of the outer door, the hole allowing the second space to communicate with the first space.

The outer door may include a support rib defining an opening, the hole being defined through the support rib.

The inner door may include a vent defined therethrough.

The door glass may include a wing disposed about an outer peripheral surface of the door glass, the inner door may include an opening and a holder disposed about an outer peripheral surface of the opening, the wing being disposed and held between the support rib of the outer door and the holder of the inner door.

The holder may include a first curvature, the wing may include a second curvature, the first curvature may abut against the second curvature, and the wing may be held between the outer door and the inner door at the abutting position of the first and second curvatures.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a perspective view illustrating an existing drum type washer;
FIG. 2 is a perspective view illustrating a drum type washer according to an embodiment, in which a door is closed;
FIG. 3 is a disassembled perspective view illustrating the door of a drum type washer according to an embodiment;
FIG. 4 is an assembled perspective view illustrating the door of a drum type washer according to an embodiment;
FIG. 5 is a sectional view taken along the line I-I' of FIG. 4; and
FIG. 6 is a perspective view illustrating an outer door of the doors of the drum type washer according to a second embodiment.

### DETAILED DESCRIPTION OF THE EMBODIMENTS

Reference will now be made in detail to the embodiment, examples of which are illustrated in the accompanying drawings, wherein like reference numerals refer to the like elements throughout. The embodiment is described below to explain the present invention by referring to the figures.

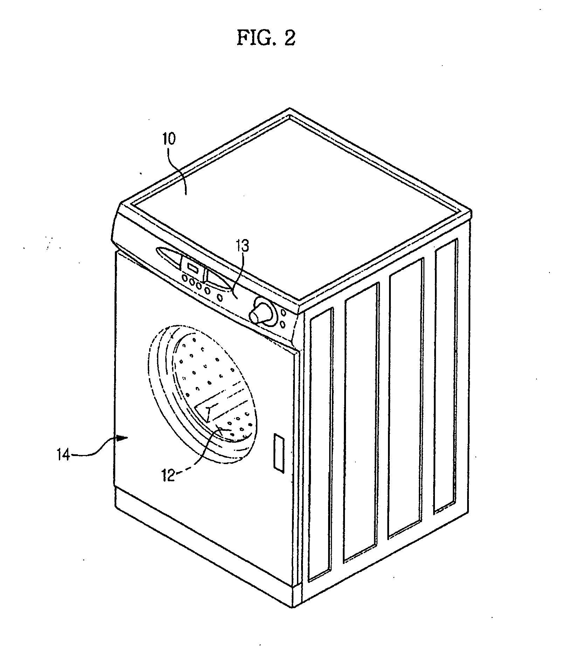

FIG. 2 is a perspective view illustrating a drum type washer according to an embodiment, in which a door is closed.

As illustrated in FIG. 2, the drum type washer includes a housing 10 representing an external appearance, a cylindrical tub (not shown) installed in the housing 10, a cylindrical drum 12 installed rotatably inside the tub and holding the wash, and a driving motor (not shown) generating a rotational force for the drum 12. The housing 10 is provided at an upper portion thereof with a control panel 13, which controls a washing method according to type and quantity of the wash. Further, the drum type washer further includes an opening 3 (see FIG. 1) in front of the housing 10 to be able to take the wash into or out of the drum, and a door 14 at the front of the housing 10 to be able to open and close the opening 3. The door 14 is pivotably coupled with the housing 10 through a hinge unit (not shown).

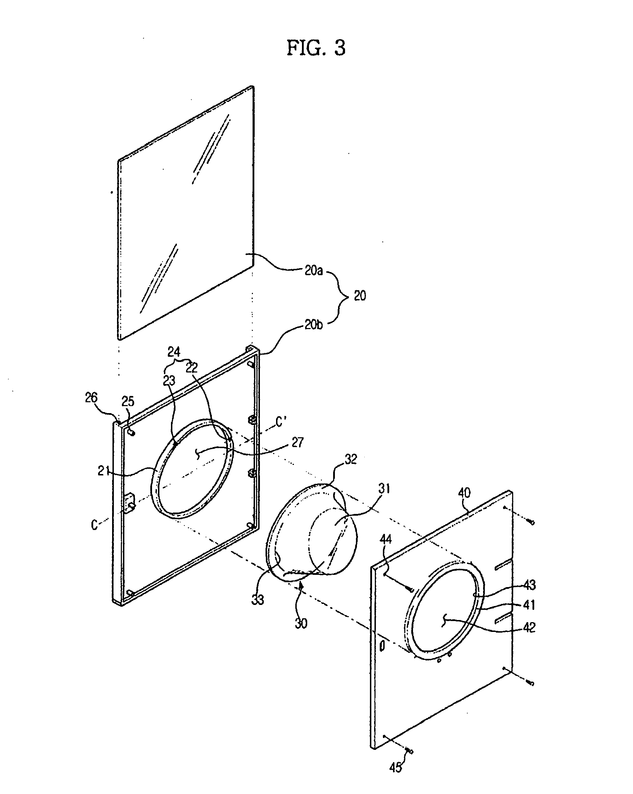

FIG. 3 is a disassembled perspective view illustrating the door of a drum type washer according to an embodiment.

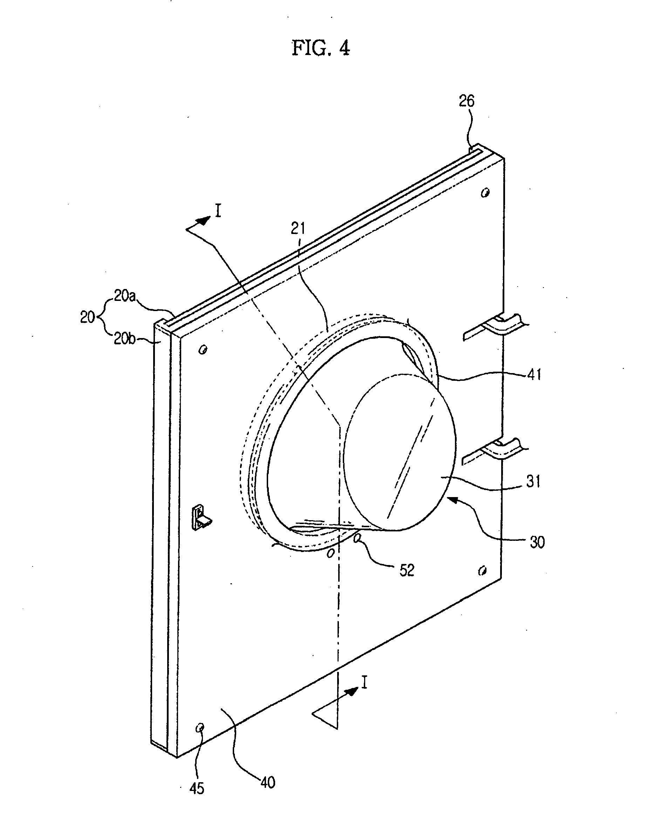

FIG. 4 is an assembled perspective view illustrating the door of a drum type washer according to an embodiment.

As illustrated in FIG. 3, the door 14 of the drum type washer includes an outer door 20 on an outer side thereof, an inner door 40 on an inner side thereof, and a door glass 30 fixed between the outer door 20 and the inner door 40.

The outer door 20 plays an important role in the beauty and aesthetic appearance of the drum type washer. Hence, the outer door 20 may be decorated with various designs. Further, the user must be able to look at the interior of the drum 12 (see FIG. 2) through the outer door 20. Thus, the outer door 20 includes a first outer door 20a that has a shape of a plate formed of a transparent material, and a second outer door 20b that fixes the first outer door 20a and is simultaneously coupled with the inner door 40.

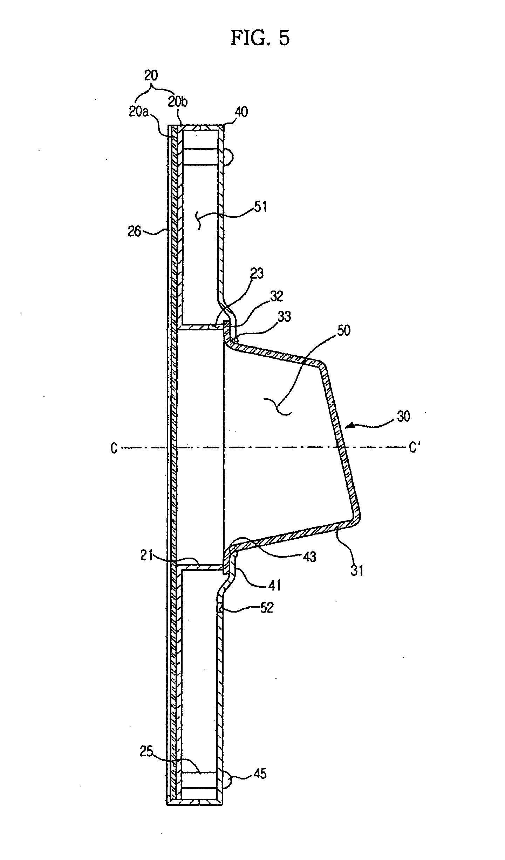

The second outer door 20b includes catch jaws 26 to fix the first outer door 20a to the second outer door 20b. When the first outer door 20a is fixed to the second outer door 20b by the catch jaws 26, the first outer door 20a comes into close contact with the second outer door 20b, so that no gap exists between the first and second outer doors 20a and 20b. Thus, as illustrated in FIG. 5, moisture created within first space 50 defined within the door glass 30 does not escape between the first and second outer doors 20a and 20b.

Further, the second outer door 20b includes screw bosses 25 to be coupled with the inner door 40. Each screw boss 25 includes an internal thread on an inner surface thereof. When the second outer door 20b is coupled with the inner door 40, the door glass 30 can be fixed between the second outer door 20b and the inner door 40. To this end, a support rib 21 protrudes from the second outer door 20b to closely support the door glass 30. The second outer door 20b includes an opening 27, which is open by an amount of the circumference of the support rib 21. The support rib 21 has the shape of a ring to support a wing 32 of the door glass 30. Further, the support rib 21 includes a hole set 24 at an end thereof, which will be described below in detail.

As illustrated in FIG. 4, the inner door 40 is coupled with the outer door 20, thereby representing an external appearance of the door 14. Referring to FIG. 3, the inner door 40 includes screw holes 44 to be fastened to the outer door 20 by screws 45. The inner door 40 includes an opening 42 at a center thereof such that a body 31 of the door glass 30 is inserted therein, and a holder 41 disposed along an outer circumference of the opening 42 such that the wing 32 of the door glass 30 is supported when the door glass 30 is inserted into the opening 42. The holder 41 includes a first curvature 43 to be engaged with the wing 32 of the door glass 30, and the wing 32 includes a second curvature 33 to be engaged with the holder 41 when the door glass 30 is inserted into the opening 42. A vent 52, discussed later, is included at the inner door 40. As illustrated in FIG. 5, when the inner 40 and outer 20 doors of the door 14 of the drum type washer are coupled together, the first curvature 43 is engaged with the second curvature 33, so that the door glass 30 can be maintained in a firmly coupled state although vibration of the drum type washer is transmitted.

An assembled sequence of the door 14 of the drum type washer will be described with reference to FIG. 3. First, when the door glass 30 is inserted through the opening 42 of the inner door 40, the wing 32 of the door glass 30 is supported to the holder 41 of the inner door 40. The support rib 21 of the outer door 20 supports the wing 32 of the door glass 30, and simultaneously brings the wing 32 of the door glass 30 into close contact with the holder 41 of the inner door 40. Finally, the inner door 40 is fastened to the outer door 20 by the screws 45, and thereby the door glass 30 is fixed between the outer door 20 and the inner door 40. In FIG. 4, this coupled door 14 of the drum type washer is shown in a perspective view.

FIG. 5 is a sectional view taken along the line I-I' of FIG. 4.

As illustrated in FIG. 5, the support rib 21 of the outer door 20 supports the door glass 30 in close contact with the door glass 30, so that the first space 50 is defined between the outer door 20 and the door glass 30. Further, the outer door 20 is fastened to the inner door 40 by the screws 45, so that a second space 51 is defined between the outer door 20 and the inner door 40.

Typically, when the support rib 21 supports the door glass 30 in close contact with the door glass 30, the first space 50 is in a semi-sealed state. Hence, the first space 50 does not communicate with the second space 51, so that moisture inside the door glass 30 is not easily eliminated. In the present embodiment, however, an end of the support rib 21, which faces the door glass 30, includes the hole set 24 (shown in Fig. 3) to allow the first space 50 to communicate with the second space 51, so that the moisture inside the door glass 30 can be easily eliminated. More than one hole set 24 may be included in the support rib 21 and the hole set 24 may have a slot shape, for example. Further, the inner door 40 includes the vent 52 such that the second space 51 easily communicates with external air. As a result, the first space 50, the second space 51, and the outside are adapted to have good ventilation, so that the moisture inside the door glass 30 can be rapidly eliminated.

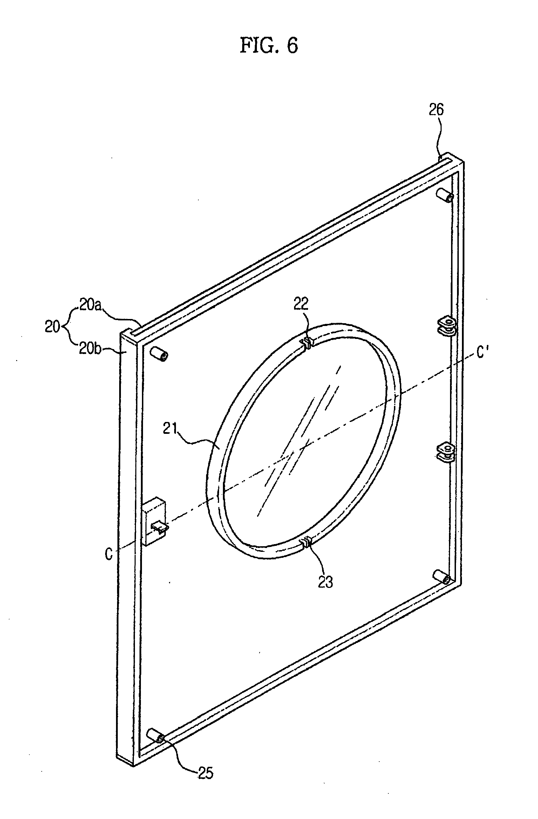

FIG. 6 is a perspective view illustrating an outer door of the doors of the drum type washer according to a second embodiment.

As illustrated in FIG. 6, the support rib 21 includes a plurality of holes 22 and 23 constituting the hole set 24. The first hole 22 of the hole set 24 is located above the central line C-C' of the support rib 21, and the second hole 23 is located below the central line C-C' of the support rib 21. Further, the first and second holes 22 and 23 are spaced apart from the central line C-C' of the support rib 21 to the greatest possible extent. In other words, the first hole 22 is located at approximately 12 o'clock along the support rib 21, and the second hole 23 is located at approximately 6 o'clock along the support rib 21.

As for the reason that the first and second holes 22 and 23 are formed as illustrated in FIG. 6, when moisture is present in the first space 50, a relative humidity is increased so that a density of the first space 50 is decreased. In this case, according to a stack effect, when the first hole 22 is formed at an uppermost end of the support rib 21, and when the second hole 23 is formed at a lowermost end of the support rib 21, a natural convection occurs most actively. In this case, the moisture inside the door glass 30 defining the first space 50 can be rapidly eliminated.

As illustrated in FIG. 2, however, when the user looks at the door 14 of the drum type washer or the interior of the drum 12, the eyes of the user are oriented from the topside to the downside. At this time, as illustrated in FIG. 6, if the second hole 23 is formed at the lowermost end of the support rib 21, the second hole 23 can be observed by the eyes of the user. For this reason, the user can misunderstand that the drum type washer is low in quality, and thus the satisfaction of consumers who prefer high-class products may be reduced. Thus, the first and second holes 22 and 23 may be located above the central line C-C' of the support rib 21, as shown in Fig. 3.

Further, as illustrated in FIG. 3, when the first and second holes 22 and 23 are formed, a perpendicular distance between the first hole 22 and the central line C-C' of the support rib 21 is preferably different from that between the second hole 23 and the central line C-C' of the support rib 21. As described above, this is because the natural convection is caused by a density difference, and thus, if the first hole 22 and the second hole 23 are located at the same height, natural convection does not occur smoothly. Hence, as illustrated in FIG. 3, the first hole 22 may be located at almost 3 o'clock along the support rib 21, and the second hole 23 is located at approximately 11 o'clock of the support rib 21.

This limitation to the positions of the first and second holes 22 and 23 is to make a compromise in order to meet both a requirement of increasing the user's aesthetic satisfaction of the external appearance of the product and a requirement of smoothly causing the natural convection, by way of an exemplary embodiment.

According to the invention, the moisture created inside the door glass can be rapidly eliminated.

Further, according to the invention, the user can clearly look at the interior of the drum through the outer door and the door glass, and cleanly maintain the beauty of the external appearance of the product.

Although few embodiments have been shown and described, it would be appreciated by those skilled in the art that changes may be made in these embodiments without departing from the principles of the invention, the scope of which is defined in the claims.

## Claims

1. A door (14) of a drum type washer, comprising:
a door glass (30);
an inner door (40) having a holder (41) to support an outer surface of the door glass (30);
an outer door (20) having a support rib (21) to support an inner surface of the door glass,
**characterized by** a first space (50) defined between the outer door (20) and the door glass (30), and the support rib (21) including a hole set (22, 23, 24) formed in the support rib such that the first space (50) communicates with an exterior of the door of the drum type washer.

2. The door according to claim 1, wherein the holder (41) includes an opening (42) into which the door glass (30) is inserted.

3. The door according to claim 2, wherein the door glass (30) has a body (31) inserted into the opening (42) of the holder (41) and a wing (32) integrally formed with the body (31) supported on the holder.

4. The door according to claim 3, wherein the holder (41) has a first curvature (43) facing the wing (32); and
the wing (32) has a second curvature (33) facing the holder (41), the first curvature (43) being engaged with the second curvature (32).

5. The door according to claim 3, wherein the support rib (21) has an annular shape to support an inner surface of the wing (32).

6. The door according to claim 1, wherein the hole set (22,23,24) is formed at an end of the support rib (21) that faces the door glass (30).

7. The door according to claim 1, wherein the support rib (21) includes a plurality of hole sets (22,23,24).

8. The door according to claim 1, wherein the hole set (22,23,24) has a slot shape.

9. The door according to claim 1, wherein the hole set (22,23,24) includes a first hole (22) located above a central line of the support (21), and a second hole (23) located below the central line of the support rib (21).

10. The door according to claim 9, wherein the first and second holes (22,23) are spaced at a distance farthest apart from one another with respect to the central line of the support rib (21).

11. The door according to claim 1, wherein the hole set (22,23,24) includes a first hole (22) and a second hole (23), and perpendicular distances of the first hole (22) and the second hole (23) to the central line of the support rib (21) are different from each other.

12. The door according to claim 11, wherein the first hole (22) is located at a position corresponding to substantially 3 o'clock along the support rib (21), and the second hole (23) is located at a position corresponding to approximately 11 o'clock along the support rib (21).

13. A door of a drum (14) type washer, comprising:
an outer door (20);
an inner door (40) disposed adjacent the outer door (20) and
a door glass (30) supported between the outer door (20) and the inner door (40) **characterized by**
a first space (50) defined between the outer door (20) and the door glass; and
a second space (51) defined between the outer door (20) and the inner door (40) adjacent to the first space (50), the second space (51) communicating with the first space (50).

14. The door according to claim 13, wherein at least one hole (22,23) is defined in a portion of the outer door (20), the hole allowing the second space (51) to communicate with the first space (50).

15. The door according to claim 14, wherein the outer door (20) includes a support rib (21) defining an opening (27), the hole (22,23) being defined through the support rib (21).

16. The door according to claim 13, wherein the inner door (40) includes a vent (52) defined therethrough.

17. The door according to claim 15, wherein the door glass (30) includes a wing (32) disposed about an outer peripheral surface of the door glass, the inner door (40) includes an opening (42) and a holder (41) disposed about an outer peripheral surface of the opening (42), the wing (32) being disposed and held between the support rib (21) of the outer door (20) and the holder (41) of the inner door (40) .

18. The door according to claim 17, wherein the holder (41) includes a first curvature (42), the wing (32) includes a second curvature (33), the first curvature (43) abuts against the second curvature (33), and the wing (32) is held between the outer door (20) and the inner door (40) at the abutting position of the first and second curvatures (43,33).

19. A drum type washer, comprising:
a drum (12) receiving laundry and being rotatable to wash the laundry and a door according to one of the claims 13 to 18,
wherein the outer door (20) has a support rib (21) closely contacting the door glass (30) to fix the door glass together with the inner door (40), the support rib (21) having a hole (22,23,24) set defined through portions of the support rib (21) and provided for communicating first and second spaces (50,51).

20. The drum type washer according to claim 19, wherein the inner door (40) includes at least one vent (52) such that the second space (51) communicates with external air.

21. The drum type washer according to claim 19, wherein the hole set (22,23,24) includes a first hole (22) located above a central line of the support rib (21), and a second hole (23) located below the central line of the support rib (21).

22. The drum type washer according to claim 21, wherein the first and second holes (22,23) are spaced at a distance farthest apart from one another with respect to the central line of the support rib (21).

23. The drum type washer according to claim 19, wherein the hole set includes a first hole (22) and a second hole (23), and perpendicular distances of the first hole (22) and the second hole (23) to the central line of the support rib (21) are different from each other.

## Patentansprüche

1. Tür (14) einer Trommelwaschmaschine, die umfasst:
ein Türglas (30);
eine innere Tür (40) mit einem Halter (41), der eine Außenfläche des Türglases (30) trägt;
eine äußere Tür (20) mit einem Tragesteg (21), der eine Innenfläche des Türglases trägt,
**gekennzeichnet durch** einen ersten Raum (50), der zwischen der äußeren Tür (20) und dem Türglas (30) ausgebildet ist, und wobei der Tragesteg (21) eine Lochgruppe (22, 23, 24) enthält, die in dem Tragesteg so ausgebildet ist, dass der erste Raum (50) mit einer Außenseite der Tür der Trommelwaschmaschine in Verbindung steht.

2. Tür nach Anspruch 1, wobei der Halter (41) eine Öffnung (42) enthält, in die das Türglas (30) eingesetzt ist.

3. Tür nach Anspruch 2, wobei das Türglas (30) einen Körper (31), der in die Öffnung (42) des Halters (41) eingesetzt ist, und einen Flansch (32) aufweist, der integral mit dem Körper (31) ausgebildet ist und von dem Halter getragen wird.

4. Tür nach Anspruch 3, wobei der Halter (41) eine erste Krümmung (43) aufweist, die dem Flansch (32) zugewandt ist; und
der Flansch (32) eine zweite Krümmung (33) aufweist, die dem Halter (41) zugewandt ist, wobei die erste Krümmung (43) mit der zweiten Krümmung (32) in Eingriff ist.

5. Tür nach Anspruch 3, wobei der Tragesteg (21) eine Ringform hat, die eine Innenfläche des Flansches (32) trägt.

6. Tür nach Anspruch 1, wobei die Lochgruppe (22, 23, 24) an einem Ende des Tragestegs (21) ausgebildet ist, das dem Türglas (30) zugewandt ist.

7. Tür nach Anspruch 1, wobei der Tragesteg (21) eine Vielzahl von Lochgruppen (22, 23, 24) enthält.

8. Tür nach Anspruch 1, wobei die Lochgruppe (22, 23, 24) eine Schlitzform hat.

9. Tür nach Anspruch 1, wobei die Lochgruppe (22, 23, 24) ein erstes Loch (22), das sich oberhalb einer Mittellinie des Trägers (21) befindet, sowie ein zweites Loch (23) enthält, das sich unterhalb der Mittellinie des Tragestegs (21) befindet.

10. Tür nach Anspruch 9, wobei das erste und das zweite Loch (22, 23, 24) um einen Abstand am weitesten voneinander in Bezug auf die Mittellinie des Tragestegs (21) entfernt sind.

11. Tür nach Anspruch 1, wobei die Lochgruppe (22, 23, 24) ein erstes Loch (22) und ein zweites Loch (23) enthält und senkrechte Abstände des ersten Lochs (22) sowie des zweiten Lochs (23) zu der Mittellinie des Tragestegs (21) voneinander verschieden sind.

12. Tür nach Anspruch 11, wobei sich das erste Loch (22) an einer Position an dem Tragesteg (21) befindet, die im Wesentlichen der 3-Uhr-Stellung entspricht, und sich das zweite Loch (23) an einer Position an dem Tragesteg (21) befindet, die annähernd der 11-Uhr-Stellung entspricht.

13. Tür (14) einer Trommelwaschmaschine, die umfasst:
eine äußere Tür (20);
eine innere Tür (40), die an die äußere Tür (20) angrenzend angeordnet ist, und
ein Türglas (30), das zwischen der äußeren Tür (20) und der inneren Tür (40) getragen wird, **gekennzeichnet durch**
einen ersten Raum (50), der zwischen der äußeren Tür (20) und dem Türglas ausgebildet ist; und
einen zweiten Raum (51), der zwischen der äußeren Tür (20) und der inneren Tür (40) an den ersten Raum (50) angrenzend ausgebildet ist, wobei der zweite Raum (51) mit dem ersten Raum (50) in Verbindung steht.

14. Tür nach Anspruch 13, wobei wenigstens ein Loch (22, 23) in einem Abschnitt der äußeren Tür (20) ausgebildet ist und das Loch zulässt, dass der zweite Raum (51) mit dem ersten Raum (50) in Verbindung steht.

15. Tür nach Anspruch 14, wobei die äußere Tür (20) einen Tragesteg (21) enthält, der eine Öffnung (27) umgrenzt, und das Loch (22, 23) durch den Tragesteg (21) hindurch ausgebildet ist.

16. Tür nach Anspruch 13, wobei die innere Tür (40) eine Lüftungsöffnung (52) enthält, die durch sie hindurch ausgebildet ist.

17. Tür nach Anspruch 15, wobei das Türglas (30) einen Flansch (32) enthält, der um eine Außenumfangsfläche des Türglases herum angeordnet ist, die innere Tür (40) eine Öffnung (42) und einen Halter (41) enthält, der um eine Außenumfangsfläche der Öffnung (42) herum angeordnet ist, und der Flansch (32) zwischen dem Tragesteg (21) der äußeren Tür (20) und dem Halter (41) der inneren Tür (40) angeordnet ist und gehalten wird.

18. Tür nach Anspruch 17, wobei der Halter (41) eine erste Krümmung (42) enthält, der Flansch (32) eine zweite Krümmung (33) enthält, die erste Krümmung (43) an der zweiten Krümmung (33) anliegt und der Flansch (32) zwischen der äußeren Tür (20) und der inneren Tür (40) an der Position gehalten wird, an der die erste und die zweite Krümmung (43, 33) aneinander anliegen.

19. Trommelwaschmaschine, die umfasst:
eine Trommel (12), die Wäsche aufnimmt und gedreht werden kann, um die Wäsche zu waschen, sowie eine Tür nach einem der Ansprüche 13 bis 18,
wobei die äußere Tür (20) einen Tragesteg (21) aufweist, der in engem Kontakt mit dem Türglas (30) ist, um das Türglas zusammen mit der inneren Tür (40) zu fixieren,
und der Tragesteg (21) eine Lochgruppe (22, 23, 24) aufweist, die durch Abschnitte der Tragerippe (21) hindurch ausgebildet ist und vorhanden ist, um den ersten und den zweiten Raum (50, 51) in Verbindung zu bringen.

20. Trommelwaschmaschine nach Anspruch 19, wobei die innere Tür (40) wenigstens eine Lüftungsöffnung (52) enthält, so dass der zweite Raum (51) mit Außenluft in Verbindung steht.

21. Trommelwaschmaschine nach Anspruch 19, wobei die Lochgruppe (22, 23, 24) ein erstes Loch (22), das sich oberhalb einer Mittellinie des Tragestegs (21) befindet, sowie ein zweites Loch (23) enthält, das sich unterhalb der Mittellinie des Tragestegs (21) befindet.

22. Trommelwaschmaschine nach Anspruch 21, wobei das erste und das zweite Loch (22, 23, 24) um einen Abstand am weitesten voneinander in Bezug auf die Mittellinie des Tragestegs (21) entfernt sind.

23. Trommelwaschmaschine nach Anspruch 19, wobei die Lochgruppe ein erstes Loch (22) und ein zweites Loch (23) enthält und senkrechte Abstände des ersten Lochs (22) sowie des zweiten Lochs (23) zu der Mittellinie des Tragestegs (21) voneinander verschieden sind.

## Revendications

1. Porte (14) d'une machine à laver à tambour, comprenant :
une vitre de porte (30) ;
une porte intérieure (40) ayant un support (41) pour soutenir une surface extérieure de la vitre de porte (30);
une porte extérieure (20) ayant une nervure de soutien (21) pour soutenir une surface intérieure de la vitre de porte,
**caractérisée par** un premier espace (50) défini entre la porte extérieure (20) et la vitre de porte (30), et la nervure de soutien (21) comprenant une série de trous (22, 23, 24) formés dans la nervure de soutien de sorte que le premier espace (50) communique avec une partie extérieure de la porte de la machine à laver à tambour.

2. Porte selon la revendication 1, dans laquelle le support (41) comprend une ouverture (42) dans laquelle la vitre de porte (30) est insérée.

3. Porte selon la revendication 2, dans laquelle la vitre de porte (30) a un corps (31) inséré dans l'ouverture (42) du support (41) et une aile (32) solidaire du corps (31) soutenue sur le support.

4. Porte selon la revendication 3, dans laquelle le support (41) a une première courbure (43) tournée vers l'aile (32); et
l'aile (32) a une seconde courbure (33) tournée vers le support (41), la première courbure (43) étant engagée avec la seconde courbure (32).

5. Porte selon la revendication 3, dans laquelle la nervure de soutien (21) a une forme annulaire pour soutenir une surface intérieure de l'aile (32).

6. Porte selon la revendication 1, dans laquelle la série de trous (22, 23, 24) est formée à une extrémité de la nervure de soutien (21) qui fait face à la vitre de porte (30).

7. Porte selon la revendication 1, dans laquelle la nervure de soutien (21) comprend une pluralité de séries de trous (22, 23, 24).

8. Porte selon la revendication 1, dans laquelle la série de trous (22, 23, 24) a une forme de fente.

9. Porte selon la revendication 1, dans laquelle la série de trous (22, 23, 24) comprend un premier trou (22) situé au dessus d'une ligne centrale de la nervure de soutien (21), et un second trou (23) situé au dessous de la ligne centrale de la nervure de soutien (21).

10. Porte selon la revendication 9, dans laquelle les premier et second trous (22, 23) sont séparés d'une distance le plus loin l'un de l'autre par rapport à la ligne centrale de la nervure de soutien (21).

11. Porte selon la revendication 1, dans laquelle la série de trous (22, 23, 24) comprend un premier trou (22) et un second trou (23), et des distances perpendiculaires du premier trou (22) et du second trou (23) jusqu'à la ligne centrale de la nervure de soutien (21) sont différentes entre elles.

12. Porte selon la revendication 11, dans laquelle le premier trou (22) est situé à une position correspondant à essentiellement 3 heures le long de la nervure de soutien (21), et le second trou (23) est situé à une position correspondant à environ 11 heures le long de la nervure de soutien (21).

13. Porte d'une machine à laver à tambour (14), comprenant :
une porte extérieure (20) ;
une porte intérieure (40) adjacente à la porte extérieure (20) et
une vitre de porte (30) soutenue entre la porte extérieure (20) et la porte intérieure (40)
**caractérisée par**
un premier espace (50) défini entre la porte extérieure (20) et la vitre de porte ; et
un second espace (51) défini entre la porte extérieure (20) et la porte intérieure (40) adjacent au premier espace (50), le second espace (51) communiquant avec le premier espace (50).

14. Porte selon la revendication 13, dans laquelle au moins un trou (22, 23) est défini dans une partie de la porte extérieure (20), le trou permettant au second espace (51) de communiquer avec le premier espace (50).

15. Porte selon la revendication 14, dans laquelle la porte extérieure (20) comprend une nervure de soutien (21) définissant une ouverture (27), le trou (22, 23) étant défini à travers la nervure de soutien (21).

16. Porte selon la revendication 13, dans laquelle la porte intérieure (40) comprend un évent (52) défini à travers cette dernière.

17. Porte selon la revendication 15, dans laquelle la vitre de porte (30) comprend une aile (32) disposée autour d'une surface périphérique extérieure de la vitre de porte, la porte intérieure (40) comprend une ouverture (42) et un support (41) disposé autour d'une surface périphérique extérieure de l'ouverture (42), l'aile (32) étant disposée et maintenue entre la nervure de soutien (21) de la porte extérieure (20) et le support (41) de la porte intérieure (40).

18. Porte selon la revendication 17, dans laquelle le support (41) comprend une première courbure (42), l'aile (32) comprend une deuxième courbure (33) la première courbure (43) bute contre la deuxième courbure (33), et l'aile (32) est maintenue entre la porte extérieure (20) et la porte intérieure (40) à la position de butée des première et deuxième courbures (43, 33).

19. Machine à laver à tambour, comprenant :
un tambour (12) recevant la lessive et étant rotatif pour laver la lessive et une porte selon l'une des revendications 13 à 18,
dans laquelle la porte extérieure (20) a une nervure de soutien (21) en contact étroit avec la vitre de porte (30) pour fixer la vitre de porte avec la porte intérieure (40), la nervure de soutien (21) ayant une série de trous (22, 23, 24) définis à travers des parties de la nervure de soutien (21) et prévus pour mettre en communication le premier et le deuxième espace (50, 51).

20. Machine à laver à tambour selon la revendication 19, dans laquelle la porte intérieure (40) comprend au moins un évent (52) de sorte que le deuxième espace (51) communique avec l'air extérieur.

21. Machine à laver à tambour selon la revendication 19, dans laquelle la série de trous (22, 23, 24) comprend un premier trou (22) situé au-dessus de la ligne centrale de la nervure de soutien (21), et un second trou (23) situé au-dessous de la ligne centrale de la nervure de soutien (21).

22. Machine à laver à tambour selon la revendication 21, dans laquelle les premier et second trous (22, 23) sont séparés d'une distance le plus loin l'un de l'autre par rapport à la ligne centrale de la nervure de soutien (21).

23. Machine à laver à tambour selon la revendication 19, dans laquelle la série de trous comprend un premier trou (22) et un second trou (23), et des distances perpendiculaires du premier trou (22) et du second trou (23) jusqu'à la ligne centrale de la nervure de soutien (21) sont différentes entre elles.
